# EUROPEAN PATENT APPLICATION

(11) **EP 2 805 618 A1**
(43) Date of publication of application: **26.11.2014**
(21) Application number: 14161827.2
(22) Date of filing: 26.03.2014
(51) Int. Cl.: A22B 3/08, A22B 3/06, A22C 21/00

(54) **Animal bleeding and electroshocking line**

(30) Priority: 23.05.2013 TR 201306158
(71) Applicant: Akyem Adana Yem Yag Biodizel Tarim ve Sanayi Ticaret Anonim Sirketi, Adana (TR)
(72) Inventor: Çali Kan, Recep, Adana (TR)
(74) Representative: Iskender, Ibrahim

(57) **Abstract**

The invention relates to an animal bleeding and electroshocking line (10) which enables the animals hanged from their feet to the hanging members (13) to advance by means of the rail (12); characterized in comprising a generator (20) meeting electricity demand; a electric transmission member (21) enabling the transmission of the electricity; a channel (18) where the animal is subjected to electroshock and a liquid conducting member (19) carrying the liquid into the channel (18).

## Description

### Technical Field

The invention relates to an animal bleeding and electroshocking line designed for healthy and tasty animal meat production.

The present invention more particularly relates to an animal bleeding and electroshocking line enabling electroshock application on poultry within the scope of producing halal (i.e. lawful, or food allowed under Islamic dietary guidelines) meat.

### State of the Art

Due to ever-increasing population, the need for industrial production of food has arisen. In this respect, industrial production of meat and meat products may be considered as a result of the increasing population. Due to the fact that the ever-increasing need for meat products cannot be met by the production of individual butchers and that unit cost of many small-scale slaughterhouses is much higher than large-scale slaughterhouses fewer in number, small-scale butchers have been gradually replaced by slaughterhouses and abattoirs.

As a result of the advancing technology, slaughterhouses have started to use automation system, and thanks to the units arranged successively, this system has become practical with a rail system acting as a conveyor. In the state of the art, animals are first taken to a slaughterhouse and slaughtered there, and then they are carried by way of a hook and taken to the belt conveyor. The operation proceeds in the other production units.

The butchers who slaughter animals in slaughterhouses must cause the blood of the animal to flow out according to Islamic guidelines. In order to perform such operations as skinning, taking out internal organs of the animal, and carcass separating, subsequent to slaughtering, the blood must be made to flow out of the animal body completely.

Unless the necessary amount of blood is made to flow out of the body of the animal, decomposition in the meat and internal organs due to microbes can be observed, depending on the amount of the blood remaining inside the body. Moreover, turning the muscles into meat becomes insufficient. This, in turn, adversely affects the taste and appearance of the meat, endurance period thereof, and thus human health.

In slaughterhouses, the animal having been slaughtered by the butcher is left lying near blood accumulation channels in order to let the blood of the animal to flow out. In this case, that the animal is in horizontal (lying) position causes the blood not to flow out of the body completely; i.e. causes some amount of blood to remain inside the body. Therefore, the quality of the meat belonging to the slaughtered animal diminishes, which poses risks for human health.

The patent search on animal bleeding and electroshocking line revealed the patent application no. TR 2012/14393; wherein the following is disclosed: the invention relates to a plant used for shocking poultry, e.g. chickens, turkeys, ducks, and quails; and to a method comprising the following steps; hanging the animal upside down, positioning the head of the animal having been hanged, shocking the animal thanks to it being hanged and positioned from the head, and obtaining an animal whose blood flow has stopped.

In animal bleeding and processing lines used in the state of the art, the processes of slaughtering animals and making their blood to flow out (i.e. animal bleeding) are performed. Animal bleeding lines and animal electroshocking methods are not used together in poultry production process. Operating principle of such systems is not compatible with "halal meat" production; therefore, they are not commonly used. Due to high voltage of electricity, the animals die even before slaughtering. This case is not allowable when it comes to halal meat production.

### Description of the Invention

The object of the invention is to provide a configuration having different technical properties and offering new developments when compared to the applications used within the state of the art.

The object of the invention is to allow the production of healthier and tastier animal meat.

Another object of the invention is to allow cleaner meat production by permitting faster blood flow by means of minimizing hormonal stress effects with electroshock effect in poultry.

Yet another object of the invention is to reduce the pain felt by the animal by suppressing brain stimulation with electroshock effect.

Another object of the invention is to help increasing the quality of the carcass by avoiding impacts due to fluttering by way of tranquilizing the animals.

Another object of the invention is to perform halal meat production in accordance with Islamic guidelines so as to achieve the aforementioned objects.

Another object of the invention is to perform faster production by employing mass production, thereby saving on time and labor costs.

In order to achieve the aforementioned objects, the invention relates to an animal bleeding and electroshocking line which enables the animals hanged from their feet to the hanging members to advance by means of the rail; wherein it comprises a generator meeting electricity demand; a electric transmission member enabling the transmission of the electricity; a channel where the animal is subjected to electroshock and a liquid conducting member carrying the liquid into said channel; hanging bodies located in a way that said rail will pass therethrough and fixing of the components; as well as comprising plastic rods, rods, and lower bases enabling said channel to be integrated with the hanging bodies.

### Figures for a Better Understanding of the Invention

Fig. 1 is the side view of the animal bleeding and electroshocking line according to the invention.
Fig. 2 is the front view of the animal bleeding and electroshocking line according to the invention.

### Part Numerals

10- Animal bleeding and electroshocking line
11- Hanging body
12- Rail
13- Hanging member
14- Hanger holder
15- Plastic rod
16- Rod
17- Lower base
18- Channel
19- Liquid conducting member
20- Generator
21- Electric transmission member
a- Flow direction

### Detailed Description of the Invention

The invention relates to an animal bleeding and electroshocking line (10) which enables the animals hanged from their feet to the hanging members (13) to advance by means of the rail (12); wherein it comprises a generator (20) meeting electricity demand; a electric transmission member (21) enabling the transmission of the electricity; a channel (18) where the animal is subjected to electroshock and a liquid conducting member (19) carrying the liquid into said channel (18); hanging bodies (11) located in a way that said rail (12) will pass therethrough and fixing of the components; as well as comprising plastic rods (15), rods (16), and lower bases (17) enabling said channel (18) to be integrated with the hanging bodies.

Also, animal bleeding and electroshocking line (10) comprises; hanger holders (14) connected with said hanging bodies (11) and holding the proceeding hanging members (13) in a way to center them, thereby preventing them from scattering; plastic rods (15) being in contact with said hanging bodies (11) from top and with the rods (16) from the bottom and preventing the electricity current from getting to the other sections; rods (15) serving for supporting purposes and in contact with said plastic rods (15); and lower bases (17) located below said channel (18) and supporting the channel (18).

The operating principle of the system is as follows; the animals hanged to the hanging members (13) from their feet proceed along the rail (12) in a-direction. While the winged animals (i.e. poultry), after having been cut from the throat, are proceeding for filtering the blood, they pass through the channels (40) and are subjected to a current of 40 volts for about 10 seconds. Thus, it is guaranteed that the animal dies without feeling any pain. Since blood flow of the tranquilized animal is slower and they cannot flutter, they are not wounded. The carcasses advancing in a way connected to hanging members (13) in a-direction are taken out of the channel (18) at the end of the line, thereby completing the process.

The current from the generator (20) enters in the channel (18) by means of the electric transmission member (21). The liquid carried by the liquid conducting member (19) is again drained by the liquid conducting member (19) along the channel (18) and electricity current is transmitted to all carcasses passing along the channel (18), and thus subjecting all carcasses to electroshock. In the system, passage of electricity current to the other sections of the line is avoided by plastic rods (15).

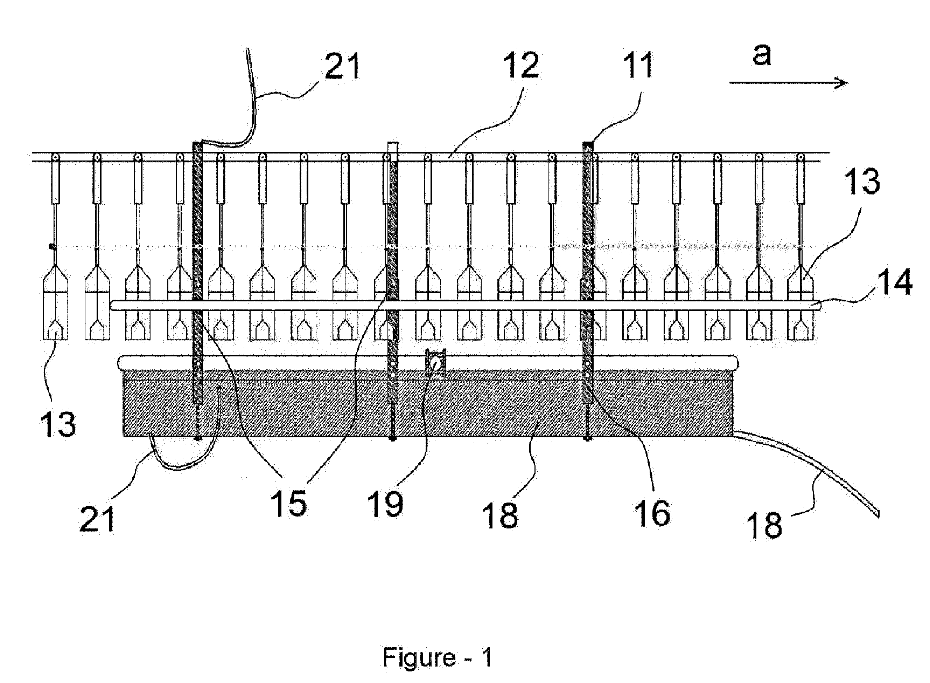

Fig. 1 shows the side view of the animal bleeding and electroshocking line (10) according to the invention. The current from the generator (20) is transferred to the channel (18) by means of the electric transmission member (21). The current is distributed with the liquid flowing inside the channel (18). The animals hanged in the hanging members (13) advance in a-direction in order and are subjected to electroshock inside the channel (18).

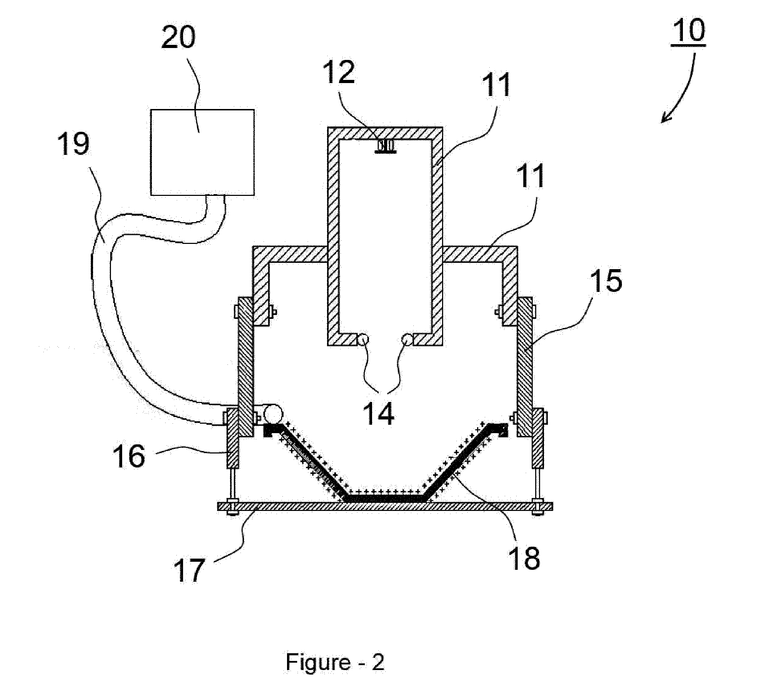

Fig. 2 shows the front view of the animal bleeding and electroshocking line (10) according to the invention. The channel (18) and the hanging body (11) are fixed by means of plastic rods (15), rods (16), and lower bases (17). The rail (12) permitting the hanging members (13) to advance and the hanger holders (14) together prevent the advancing hanging bodies (11) in a-direction from scattering, by holding from both sides in a way to center them.

## Claims

1. An animal bleeding and electroshocking line (10) which enables animals hanged from their feet to hanging members (13) to advance by means of rail (12); **characterized in** comprising a generator (20) meeting electricity demand; an electric transmission member (21) enabling transmission of electricity; a channel (18) where the animal is subjected to electroshock and a liquid conducting member (19) carrying liquid.

2. The animal bleeding and electroshocking line (10) according to Claim 1; **characterized in** comprising hanging bodies (11) located in a way that said rail (12) will pass therethrough and fixing components.

3. The animal bleeding and electroshocking line (10) according to Claims 1 and 2; **characterized in** comprising hanger holders (14) preventing advancing hanging members (13) from scattering, by holding from both sides in a way to center them.

4. The animal bleeding and electroshocking line (10) according to Claim 1; **characterized in** comprising plastic rods (15), rods (16), and lower bases (17), enabling said channel (18) to be integrated with the hanging bodies (11).

5. The animal bleeding and electroshocking line (10) according to Claim 4; **characterized in** comprising non-conductive plastic rods (15) that prevent the electricity current from getting to the other sections.

6. The animal bleeding and electroshocking line (10) according to Claim 1; **characterized in that** it comprises a channel (18) coated with chrome.
